# EUROPÄISCHE PATENTSCHRIFT

(11) **EP 2 942 234 B1**
(45) Veröffentlichungstag und Bekanntmachung des Hinweises auf die Patenterteilung: **22.08.2018**
(21) Anmeldenummer: 15165888.7
(22) Anmeldetag: 30.04.2015
(51) Int. Cl.: B60R 1/00

(54) **AUSSENRÜCKSPIEGEL FÜR EIN FAHRZEUG, INSBESONDERE NUTZFAHRZEUG**
EXTERNAL REAR-VIEW MIRROR FOR A MOTOR VEHICLE, IN PARTICULAR A COMMERCIAL VEHICLE
RÉTROVISEUR EXTÉRIEUR POUR UN VÉHICULE, NOTAMMENT POUR UN VÉHICULE UTILITAIRE

(30) Priorität: 08.05.2014 DE 102014208687
(43) Veröffentlichungstag der Anmeldung: 11.11.2015
(73) Patentinhaber: MEKRA LANG GmbH & Co. KG, 91465 Ergersheim (DE)
(72) Erfinder: Lang, Werner Dr., 91465 Ergersheim (DE); Hornung, Michael, 91465 Ergersheim (DE); Centmayer, Stefan, 91465 Ergersheim (DE); Pfeiffer, Martin, 97258 Ippesheim (DE)
(74) Vertreter: Winter, Brandl, Fürniss, Hübner, Röss, Kaiser, Polte - Partnerschaft mbB

(56) Entgegenhaltungen:
- EP-A1- 2 743 134
- WO-A1-2010/028700
- DE-A1- 4 133 330
- DE-A1-102012 221 348
- DE-U1- 29 606 416
- US-A- 4 895 435
- US-B1- 6 565 219

## Beschreibung

Die Erfindung betrifft einen Außenrückspiegel für ein Fahrzeug, insbesondere für ein Nutzfahrzeug.

Ein Außenrückspiegel der in Frage stehenden Art umfasst im Wesentlichen einen mittels einer Haltevorrichtung an einem Karosserieteil eines Fahrzeugs anordenbaren Spiegelkopf mit einer Spiegelschale, wobei im Bereich eines Öffnungsrands der Spiegelschale wenigstens eine reflektierende Fläche gehalten ist.

Zur Festlegung der reflektierenden Fläche im Bereich des Spiegelschalenöffnungsrands ist es bekannt, die reflektierende Fläche einzukleben (vergl. z.B. EP 2 743 134 A1), mittels entsprechenden Befestigungsmitteln einzuklipsen (vergl. z.B. DE 41 33 330 A1, WO 2010/028700 A1 oder US 6 565 219 B1), oder komplett umlaufend am/im Öffnungsrand einzuschrumpfen.

In jüngerer Zeit ins Leben gerufene Vorschriftenänderungen (ECE R46) in Bezug auf ein vergrößertes Sichtfeld der Gruppe V ab einer Anbauhöhe von 2,40 m haben die Notwendigkeit ergeben, dass die reflektierende Fläche (z. B. ein Spiegelglas) bei gleichbleibendem Wölbungsradius des Spiegels in der Fläche vergrößert werden muss. Die Notwendigkeit der vergrößerten Spiegelfläche führt zwangsläufig zu einer Vergrößerung des die reflektierende Fläche bereitstellenden Bauteils, also beispielsweise des Spiegelglases, und das dadurch resultierende höhere Gewicht macht eine höhere Steifigkeit des gesamten Spiegelsystems notwendig. Hierdurch erhöht sich der Materialaufwand im Bereich des gesamten Spiegelsystems, um die notwendige Steifigkeit (Vibrationsbeständigkeit) gewährleisten zu können. Darüber hinaus sind vergrößerte Spiegelflächen und damit entsprechend vergrößerte Spiegelköpfe nachteilig mit Blick auf die aerodynamischen Eigenschaften, Windgeräusche, Gefahr von Kollisionen, optisches Erscheinungsbild insgesamt etc.

Mit Blick hierauf wäre es an sich vorteilhaft, trotz der Forderung nach einem vergrößerten Sichtfeld die Größe der reflektierenden Fläche bzw. des die reflektierende Fläche bereitstellenden Bauteils im Wesentlichen beibehalten zu können bzw. möglichst wenig vergrößern zu müssen.

Aus der bereits oben genannten US 6 565 219 B1 ist ein Spiegelelement bekannt, bei dem ein Teil des Außenumfangs der Spiegelscheibe durch langgestreckte, elastisch verformbare Halteclipse fixiert ist. Ausweislich beispielsweise Fig. 4a der US 6 565 219 B1 ist die Spiegelscheibe in Draufsicht annähernd rechteckförmig mit zwei Lang- und zwei Schmalseiten und die Halteclipse umgreifen die beiden Schmalseiten. Das Spiegelglas wird bei der Montage in einen der beiden Halteclipse gesteckt und dann durch Druck der andere Halteclip elastisch verformt, so dass er nach Rückkehr in seine Ursprungsform den Spiegelscheibenrand ebenfalls um- oder übergreift. Diese Art der Spiegelscheibenbefestigung wird bei der US 6 565 219 B1 gewählt, weil auf eine Austauschbarkeit des Spiegelglases, insbesondere auf eine zerstörungsfreie Austauschbarkeit abgehoben wird. Allerdings ist damit - was die Befestigung der Spiegelscheibe betrifft - die dortige Konstruktion ausgereizt. Eine Vergrößerung des Sichtfelds unter Beibehaltung der reflektierenden Fläche ist nicht mehr möglich, da dies entweder einen vollständigen oder teilweisen Verzicht auf wenigstens einen der Halteclipse bedeuten würde. Dies wiederum würde jedoch die sichere Halterung der Spiegelscheibe unmöglich machen. Damit bleibt auch bei der US 6 565 219 B1 nur die Möglichkeit, die Spiegelfläche an sich zu vergrößern.

Die vorliegende Erfindung hat es sich demgegenüber zur Aufgabe gemacht, einen Lösungsansatz für die Problematik zu finden, trotz der Forderung nach einem vergrößerten Sichtfeld die Größe der reflektierenden Fläche bzw. des die reflektierende Fläche bereitstellenden Bauteils im Wesentlichen beibehalten zu können bzw. möglichst wenig vergrößern zu müssen.

Erfindungsgemäß stellt die vorliegende Erfindung somit einen Außenrückspiegel für ein Fahrzeug, insbesondere Nutzfahrzeug, der oben geschilderten Art zur Verfügung, wobei die wenigstens eine reflektierende Fläche im Bereich des Öffnungsrands der Spiegelschale dadurch gehalten ist, dass der Öffnungsrand der Spiegelschale unter Bildung einer Aufschrumpfung auf eine umlaufende Kante der reflektierenden Fläche aufgeschrumpft ist, wobei die Aufschrumpfung an wenigstens einem Abschnitt der umlaufenden Kante derart unterbrochen ist, dass die dortige reflektierende Fläche vom Material des Öffnungsrands und/oder der Aufschrumpfung unbedeckt ist, so dass die reflektierende Fläche bei einer Wesentlichen unveränderter Gesamtgröße ein größeres Sichtfeld bereitzustellen vermag. "Im Wesentlichen unveränderte Gesamtgröße" ist im Rahmen der vorliegenden Erfindung dahingehend zu verstehen, dass die Größe der reflektierenden Fläche bzw. des die reflektierende Fläche bereitstellenden Bauteils durch die erfindungsgemäße Maßnahme unverändert bleiben kann, um das geforderte vergrößerte Sichtfeld zu erreichen. Es kann auch notwendig sein, die Größe der reflektierenden Fläche bzw. des die reflektierende Fläche bereitstellenden Bauteils um einen gewissen Betrag zu erhöhen, um das geforderte Ziel zu erreichen. Allerdings liegt diese Abmessungsvergrößerung immer noch erheblich unter derjenigen, die bei einem herkömmlichen Spiegel in Kauf zu nehmen wäre.

Der Gegenstand der vorliegenden Erfindung verfolgt somit das Konstruktionsprinzip des umlaufend eingeschrumpften Spiegelglases, welches bekannt, ausgereift und technisch problemlos beherrschbar ist. Erfindungsgemäß wird dieses Konstruktions- bzw. Befestigungsprinzip für die reflektierende Fläche dadurch weitergebildet, dass die Aufschrumpfung an wenigstens einem Abschnitt der umlaufenden Kante unterbrochen ist. An diesem wenigstens einen Abschnitt ist die dort liegende reflektierende Fläche tierenden Fläche möglich, z.B. eine spiegelnd beschichtete Glasplatte auf einer Trägerplatte aus Kunststoff.

Gemäß einer weiteren bevorzugten Ausgestaltungsform nach Anspruch 4 kann die in das Innere der Spiegelschale weisende Rückseite der reflektierenden Fläche zumindest im Bereich der unterbrochenen Aufschrumpfung oder Einschrumpfung hinterstützt sein. Hierdurch werden die auf die reflektierende Fläche wirkenden Haltekräfte einerseits und eine im Wesentlichen vibrationsfreie Lagerung der reflektierenden Fläche andererseits sichergestellt.

Gemäß einer weiteren bevorzugten Ausgestaltungsform nach Anspruch 5 kann die Aufschrumpfung mehrfach unterbrochen sein. Die mehrfache Unterbrechung, welche gemäß zwei weiteren bevorzugten Ausgestaltungsformen nach Anspruch 6 und/oder 7 regelmäßig entlang dem Spiegelschalenrand verteilt ausgebildet sein kann bzw. achsensymmetrisch auf dem Spiegelschalerand verteilt ausgebildet sein kann, erlaubt, dass die reflektierende Fläche an den von der Flächengeometrie her optimalen Positionen vom Material des Öffnungsrands unbedeckt sein kann, um bei im Wesentlichen unveränderter Gesamtgröße der reflektierenden Fläche ein Maximum an bereitstellbarem Sichtfeld zu erreichen.

Weitere Einzelheiten, Aspekte und Vorteile der vorliegenden Erfindung ergeben sich aus der nachfolgenden Beschreibung anhand der Zeichnung.

Es zeigt:
Fig. 1 schematisch vereinfacht eine Ansicht auf einen erfindungsgemäßen Außenrückspiegel;
Fig. 2 eine vergrößerte Schnittdarstellung der Befestigung zwischen Spiegelschalenrand und reflektierender Fläche im Bereich einer Ein- oder Aufschrumpfung;
Fig. 3 eine Fig. 2 entsprechende Darstellung in dem in Fig. 1 mit dem Bezugszeichen 7 gekennzeichneten Bereich;
Fig. 4 in Verbindung mit Fig. 6 und Fig. 7 eine schematische Darstellung des mit einem erfindungsgemäßen Außenrückspiegel erreichbaren Sichtfelds;
Fig. 5 in Verbindung mit Fig. 6 und Fig. 7 eine schematische Darstellung zur Erläuterung eines mit einem herkömmlichen Außenrückspiegel erreichbaren Sichtfelds;
Fig. 6 einen unmittelbaren Vergleich des Sichtfelds aus Fig. 4 mit dem Sichtfeld aus Fig. 5;
Fig. 7 eine Fig. 1 entsprechende Darstellung zur Erläuterung verdeckter Sichtbereiche; und
Fig. 8 eine Fig. 1 entsprechende Darstellung auf einen Außenrückspiegel nach dem Stand der Technik.

In den einzelnen Figuren der Zeichnung sind gleiche oder einander entsprechende Teile oder Abschnitte mit gleichen Bezugszeichen versehen und eine redundante Beschreibung erfolgt nur bei Bedarf.

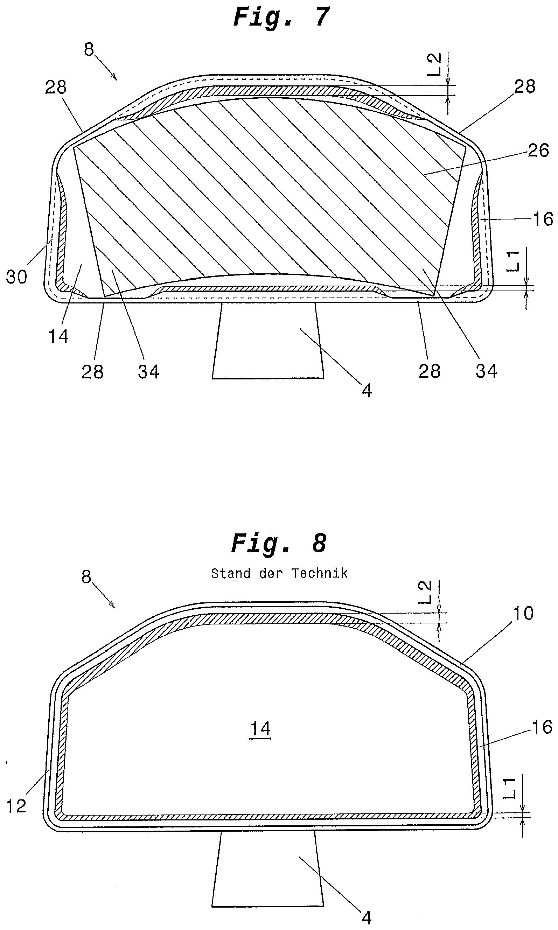

Zunächst sei vor der Erläuterung eines erfindungsgemäßen Außenrückspiegels anhand von Fig. 8 ein Außenrückspiegel nach dem Stand der Technik beschrieben.

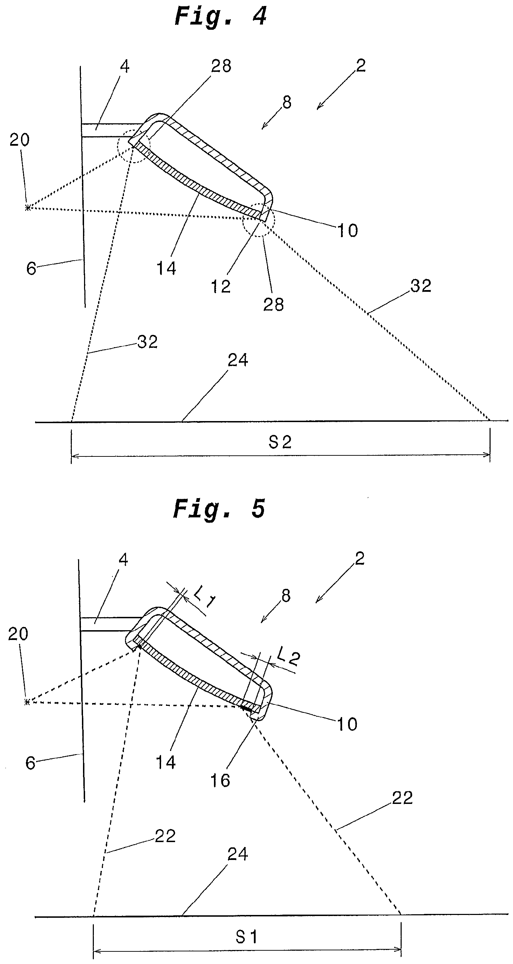

Ein in Fig. 8 und auch den verbleibenden entsprechenden Figuren der Zeichnung dargestellter Außenrückspiegel 2 (nachfolgend mit "Rückspiegel" bezeichnet) ist mittels einer nicht näher ausgeführten Haltevorrichtung 4, welche im Bedarfsfall noch eine Verstellbewegung um eine oder mehrere Achsen erlaubt, also wenigstens ein entsprechendes Gelenk aufweist, an einem Karosserieteil 6 (Figuren 4 bis 6) befestigt. Der Rückspiegel 2 umfasst in bekannter Bauweise einen Spiegelkopf 8 mit einer Spiegelschale 10, wobei im Bereich eines Öffnungsrands 12 der Spiegelschale 10 wenigstens eine reflektierende Fläche angeordnet ist. Die reflektierende Fläche kann zum Beispiel aus Metall oder Kunststoff mit einer reflektierenden Beschichtung, in einem bevorzugten Ausführungsbeispiel jedoch in Form eines Spiegelglases ausgebildet sein. In der nachfolgenden Beschreibung wird die reflektierende Fläche als "Spiegelglas 14" bezeichnet.

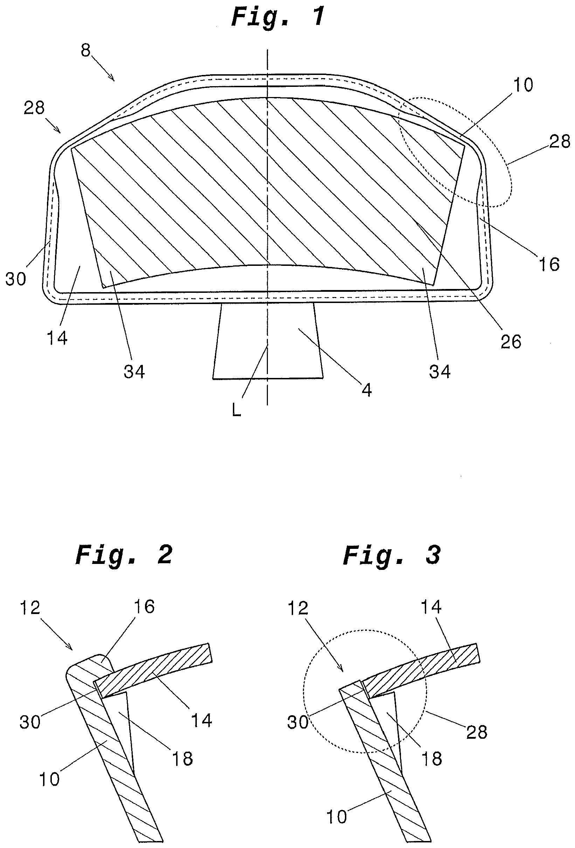

Die Befestigung des Spiegelglases 14 im Bereich des Öffnungsrands 12 der Spiegelschale 10 erfolgt dadurch, dass ein freier äußerer Endabschnitt des Öffnungsrands 12 bzw. das dortige Material der Spiegelschale 10 auf eine umlaufende Kante des Spiegelglases 14 aufgeschrumpft wird oder ist, um eine umlaufende Aufschrumpfung 16 oder Einschrumpfung des Spiegelglases (Fig. 2) zu bilden. Diese Aufschrumpfung 16 oder dieser Schrumpfrand hält zusammen mit einem umlaufenden Steg 18 oder einer Mehrzahl derartiger Stege 18, die entlang dem Öffnungsrands 12 verteilt angeordnet sind und die sich von hinten an die Rückseite des Spiegelglases 14 anlegen, das Spiegelglas 14 im Bereich des Öffnungsrands 12 der Spiegelschale 10.

Wie aus Fig. 8 in Zusammenschau mit Fig. 2 hervorgeht, überdeckt oder übergreift die Aufschrumpfung 16 das Spiegelglas 14 randseitig um einen bestimmten Betrag. Hieraus ergibt sich in der Praxis eine Abdeckung oder Abschattung des Spiegelglases, die umfangsseitig umlaufend betrachtet gleiche Breite haben kann oder die sich in ihrer Breite ändern kann, wie in Fig. 8 mit L1 und L2 dargestellt ist, wobei L1 < L2 gelten möge.

Aus dieser randseitigen Abschattung des Spiegelglases 14 resultiert ein gewisser Flächenverlust an von dem Spiegelglas 14 bereitstellbarer, effektiver reflektierender Fläche. Hieraus ergibt sich wiederum eine Einschränkung eines Sichtfelds, welches von dem Rückspiegel 2 zur Verfügung gestellt werden kann.

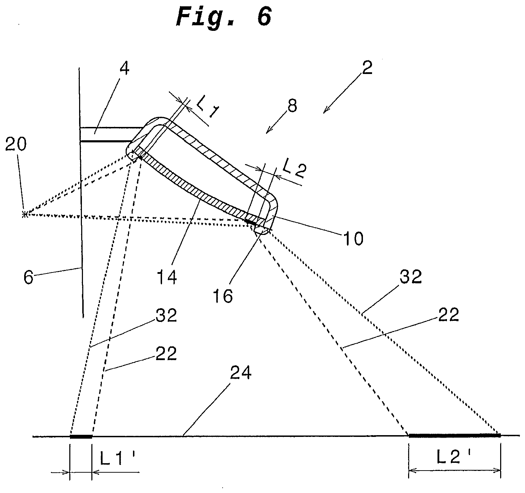

Figur 5 in Verbindung mit der später noch zu erläuternden Fig. 6 zeigt diesen Sachverhalt: Der Schrumpfrand oder die Aufschrumpfung 16, welche bei dem Rückspiegel 2 nach dem Stand der Technik einen äußeren umlaufenden Rand des Spiegelglases 14 vollständig abdeckt, bewirkt, dass sich die abgedeckten oder abgeschatteten Sichtbereiche L1 bzw. L2 gemäß Fig. 8 ergeben, so dass ein Betrachter in einem Fahrzeug, der in den Rückspiegel 2 blickt und dessen Augpunkt mit 20 bezeichnet sei, ein Sichtfeld zur Verfügung hat, das in Fig. 5 durch die Sichtstrahlen 22 angezeigt ist. Die Sichtstrahlen 22 begrenzen bei einem Rückspiegel 2 nach dem Stand der Technik einen Bereich S1 auf einer Bodenfläche 24.

Figur 1 zeigt eine Fig. 8 entsprechende Darstellung auf einen erfindungsgemäßen Rückspiegel 2 mit der Haltevorrichtung 4 und dem Spiegelkopf 8 bzw. der Spiegelschale 10, welche im Bereich des Öffnungsrands 12 das Spiegelglas 14 trägt. Figur 7 zeigt eine Fig. 1 entsprechende Darstellung, wobei hier ebenfalls die von dem Schrumpfrand 16 erzeugten Abschattungen oder Sichtbereichverdeckungen L1 und L2 dargestellt sind.

Eine schraffierte Fläche 26 in den Figuren 1 und 7 veranschaulicht ein gesetzliches Sichtfeld, wobei ein unmittelbarer Vergleich der Figuren 7 und 8 erkennen lässt, dass das gesetzliche Sichtfeld 26 bei unveränderter Größe des Spiegelglases 14 bzw. der hiervon gestellten reflektierenden Fläche nicht erhaltbar ist. Zur Erzielung des Sichtfelds 26 gemäß Fig. 7 müsste bei der Ausbildung nach dem Stand der Technik gemäß Fig. 8 die Spiegelschale 10 entsprechend vergrößert werden, um für eine größere reflektierende Fläche Platz zu schaffen, welche dann wiederum das vergrößerte Sichtfeld 26 zur Verfügung stellen könnte.

Beim Gegenstand der vorliegenden Erfindung wird gemäß den Figuren 1 und 7 anstelle einer Vergrößerung des Spiegelkopfs 8 zum Erhalt eines vergrößerten Spiegelglases 14 der Schrumpfrand oder die Aufschrumpfung 16 an wenigstens einem Abschnitt oder Teilbereich der umlaufenden Kante des Spiegelglases 14 unterbrochen oder weggelassen. Es ergeben sich somit beispielsweise bei dem Ausführungsbeispiel von Fig. 1 zwei Abschnitte 28, welche achsensymmetrisch bezüglich einer Längsmittellinie L des Rückspiegels 2 angeordnet sind. In den Abschnitten 28 ist die Aufschrumpfung 16 unterbrochen, so dass die dortige vom Spiegelglas 14 zur Verfügung gestellte reflektierende Fläche von dem Material der Aufschrumpfung 16 (gebildet aus dem Spiegelschalenrand 12) unbedeckt ist.

Die umlaufende Kante des Spiegelglases 14 ist in den Figuren 1, 3 und 7 mit den Bezugszeichen 30 versehen, wobei sie in den Figuren 1 und 7 durch die gestrichelte Linie dargestellt ist.

Figur 3 zeigt eine vergrößerte Ansicht im Bereich des Abschnitts 28, wo erkennbar ist, dass die umlaufende Kante 30 des Spiegelglases 14 von dem Material der Spiegelschale 10 nicht bedeckt ist, also kein Schrumpfrand 16 gemäß Fig. 2 auf der Außenseite des Spiegelglases 14 aufliegt.

Ein durchgehender Steg 18 oder eine Mehrzahl von Stegen 18, welche entlang dem umlaufenden Öffnungsrand 12 der Spiegelschale 10 ausgebildet ist oder sind, stützt oder stützen das Spiegelglas 14 sowohl im Bereich der Aufschrumpfung oder des Schrumpfrands 16 als auch bevorzugt im Bereich des Abschnitts oder der Abschnitte 28.

Dadurch, dass gemäß Fig. 1 der Schrumpfrand 16 im dargestellten Ausführungsbeispiel im Bereich der zwei Abschnitte 28 unterbrochen oder weggelassen ist, kann das Spiegelglas 14 das Sichtfeld 26 zur Verfügung stellen, ohne dass die Fläche des Spiegelglases 14 und damit die Abmessungen der Spiegelschale 10 bzw. des Spiegelkopfs 8 vergrößert werden müssen. Durch die Abschnitte oder Aussparungen 28 ergibt sich somit eine Vergrößerung des Sichtfeldes, gepaart mit einer verringerten Abschattungswirkung des Öffnungsrandes 12 auf die reflektierende Fläche bzw. das Spiegelglas 14.

Wie aus dem Vergleich von Fig. 4 und Fig. 5 hervorgeht, kann mit dem erfindungsgemäßen Rückspiegel 2 ein größerer Abschnitt S2 auf der Bodenfläche 24 abgedeckt werden (Sichtstrahlen 32). Es gilt S2 > S1.

Ermöglicht wird dies dadurch, dass die Sichtbereichsverdeckungen oder Abschattungen L1 und L2 gemäß den Figuren 5 und 8 ausweislich Fig. 7 zwar nach wie vor in den Bereichen außerhalb der Abschnitte 28 vorhanden sind, jedoch in den kritischen oder relevanten Bereichen der Abschnitte 28 nicht, so dass insgesamt das größere Sichtfeld 26 zur Verfügung gestellt werden kann, in welchem gemäß Fig. 4 die Abschattungen L1 und L2 nicht vorliegen.

Es ergeben sich somit gemäß Fig. 6 zwei Sichtbereichsverdeckungen oder Abschattungen L1' und L2' auf der Bodenfläche 24, welche beim Rückspiegel 2 nach dem Stand der Technik vorhanden sind, beim erfindungsgemäßen Rückspiegel jedoch nicht (vgl. Sichtstrahlen 22 und 32). Im Rahmen der vorliegenden Erfindung durchgeführte Untersuchungen und Tests haben ergeben, dass bezüglich der Abschattungen L1, L1' und L2, L2' in der Praxis ein Verhältnis von 1:10 oder mehr vorliegt, d.h. eine Abschattung L1 seitens der reflektierenden Fläche 14 von z.B. 5 mm aufgrund des übergreifenden Schrumpfrandes 16 führt zu einer Abschattung L1' auf der Bodenfläche 24 von wenigstens 50 mm. Gleiches gilt für L2 und L2'.

Die Anzahl, Lage, Verteilung und Größe, d. h. Erstreckung entlang der Kante 30 des Spiegelglases 14 bzw. des Öffnungsrands 12 der Spiegelschale 10 der jeweiligen Abschnitte 28 richtet sich nach der letztendlichen Form des Spiegelglases 14 und/oder seiner Größe, d. h. Fläche, und/oder dem Sichtfeld 26, welches zur Verfügung gestellt werden soll, ohne die Fläche des Spiegelglases 14 vergrößern zu müssen. Beispielsweise kann es notwendig sein, anstelle von oder zusätzlich zu den beiden in Fig. 1 im oberen Bereich liegenden Abschnitten 28, wo der Schrumpfrand 16 unterbrochen ist, im Bereich zweier (imaginärer) unterer Ecken 34 des Sichtfelds 26 ebenfalls z.B. zwei Abschnitte 28 in dem Schrumpfrand 16 auszubilden (vgl. Fig. 7). Die Anordnung oder Ausbildung der Abschnitte 28 muss nicht symmetrisch zur Linie L sein. Auch müssen die Abschnitte 28 nicht von gleicher Größe sein.

### Bezugszeichenliste:

- 2: Rückspiegel
- 4: Haltevorrichtung
- 6: Karosserieteil
- 8: Spiegelkopf
- 10: Spiegelschale
- 12: Öffnungsrand
- 14: reflektierende Fläche/Spiegelglas
- 16: Aufschrumpfung/Schrumpfrand
- 18: Steg
- 20: Augpunkt
- 22: Sichtstrahl bei Abschattung durch L1/L2
- 24: Bodenfläche
- 26: gesetzl. Sichtfeld
- 28: Abschnitt
- 30: Kante von 14
- 32: Sichtstrahl ohne Abschattung
- 34: Ecke(n) von 26

- L1/L2: Sichtbereichabschattungen durch 16 auf 14
- L1'/L2': Sichtbereichabschattungen durch 16 auf 24
- S1/S2: Sichtbereiche auf 24
- L: Längsmittellinie von 2 bzw. 10

## Patentansprüche

1. Außenrückspiegel für ein Fahrzeug, insbesondere Nutzfahrzeug, mit:
einem mittels einer Haltevorrichtung (4) an einem Karosserieteil (6) des Fahrzeugs anordenbaren Spiegelkopf (8) mit einer Spiegelschale (10), wobei im Bereich eines Öffnungsrandes (12) der Spiegelschale (10) wenigstens eine reflektierende Fläche (14) dadurch gehalten ist, dass der Öffnungsrand (12) der Spiegelschale (10) auf eine umlaufende Kante (30) der reflektierenden Fläche (14) unter Bildung einer Aufschrumpfung (16) aufgeschrumpft ist, wobei die Aufschrumpfung (16) an wenigstens einem Abschnitt (28) der umlaufenden Kante (30) derart unterbrochen ist, dass die dortige reflektierende Fläche (14) vom Material des Öffnungsrands (12) und/oder der Aufschrumpfung (16) unbedeckt ist, so dass die reflektierende Fläche (14) bei im Wesentlichen unveränderter Gesamtgröße ein größeres Sichtfeld (26) bereitzustellen vermag.

2. Außenrückspiegel nach Anspruch 1, **dadurch gekennzeichnet, dass** die reflektierende Fläche (14) von einem Spiegelglas gebildet ist.

3. Außenrückspiegel nach Anspruch 1, **dadurch gekennzeichnet, dass** die reflektierende Fläche (14) von einer Metall- oder Kunststoffplatte mit reflektierender Oberfläche gebildet ist.

4. Außenrückspiegel nach einem der Ansprüche 1 bis 3, **dadurch gekennzeichnet, dass** die in das Innere der Spiegelschale (10) weisende Rückseite der reflektierenden Fläche (14) zumindest im Abschnitt (28) der unterbrochenen Aufschrumpfung (16) hinterstützt ist.

5. Außenrückspiegel nach einem der vorhergehenden Ansprüche, **dadurch gekennzeichnet, dass** die Aufschrumpfung (16) mehrfach unterbrochen ist.

6. Außenrückspiegel nach Anspruch 5, **dadurch gekennzeichnet, dass** die Abschnitte (28) der unterbrochenen Aufschrumpfung (16) regelmäßig entlang des Spiegelschalenrandes (12) verteilt ausgebildet sind.

7. Außenrückspiegel nach Anspruch 5 oder 6, **dadurch gekennzeichnet, dass** die Abschnitte (28) der unterbrochenen Aufschrumpfung (16) achsensymmetrisch auf dem Spiegelschalenrand (12) verteilt ausgebildet sind.

## Claims

1. External rear-view mirror for a vehicle, in particular utility vehicles, comprising:
a mirror head (8) with a mirror frame (10) which can be arranged on a body part (6) of the vehicle using a lug (4), wherein in the area of an opening edge (12) of the mirror frame (10), at least one reflective surface (14) is held in such a way that the opening edge (12) of the mirror frame (10) is shrunk to a circumferential edge (30) of the reflective surface (14) resulting in a shrinking (16), wherein the shrinking (16) is broken at least at one section (28) in the circumferential edge (30) in such a way that the reflective surface (14) there is not covered by the material of the opening edge (12) and/or of the shrinkage (16), so that the reflective surface (14) is able to provide a larger field of vision (26) with a largely unchanged total size.

2. Exterior rear-view mirror according to Claim 1, **characterised in that** the reflective surface (14) is formed by a mirror glass.

3. Exterior rear-view mirror according to Claim 1, **characterised in that** the reflective surface (14) is formed out of a metal or plastic plate with reflective surface.

4. Exterior rear-view mirror according to one of Claims 1 to 3, **characterised in that** the rear side of the reflective surface (14) shown on the inside of the mirror frame (10) is supported from behind at least in the section (28) of the broken shrinking (16).

5. Exterior rear-view mirror according to one of the preceding Claims, **characterised by** the shrinking (16) being broken several times.

6. Exterior rear-view mirror according to Claim 5, **characterised in that** the sections (28) of the broken shrinking (16) are distributed regularly along the mirror frame edge (12).

7. Exterior rear-view mirror according to Claim 5 or 6, **characterised in that** the sections (28) of the broken shrinking (16) are distributed axis-symmetrically on the mirror frame edge (12).

## Revendications

1. Rétroviseur extérieur pour un véhicule, en particulier véhicule utilitaire, comprenant :
une tête de miroir (8) pourvue d'une coque de miroir (10) et pouvant être agencée sur un élément de carrosserie (6) du véhicule au moyen d'un dispositif de retenue (4), dans lequel au moins une surface réfléchissante (14) est retenue dans la zone d'un bord d'ouverture (12) de la coque de miroir (10) par le fait que le bord d'ouverture (12) de la coque de miroir (10) est rétréci sur un bord périphérique (30) de la surface réfléchissante (14) avec formation d'un rétrécissement (16), dans lequel le rétrécissement (16) est interrompu sur au moins une partie (28) du bord périphérique (30) de telle manière que la surface réfléchissante (14) locale du matériau du bord d'ouverture (12) et/ou du rétrécissement (16) n'est pas recouverte, de sorte que la surface réfléchissante (14) est en mesure de fournir un champ de vision (26) plus important pour une taille totale sensiblement inchangée.

2. Rétroviseur extérieur selon la revendication 1, **caractérisé en ce que** la surface réfléchissante (14) est formée par un verre de miroir.

3. Rétroviseur extérieur selon la revendication 1, **caractérisé en ce que** la surface réfléchissante (14) est formée par une plaque en métal ou en matière plastique présentant une surface supérieure réfléchissante.

4. Rétroviseur extérieur selon l'une quelconque des revendications 1 à 3, **caractérisé en ce que** la face arrière de la surface réfléchissante (14), laquelle face est tournée vers l'intérieur de la coque de miroir (10), est soutenue au moins dans la partie (28) du rétrécissement (16) interrompu.

5. Rétroviseur extérieur selon l'une quelconque des revendications précédentes, **caractérisé en ce que** le rétrécissement (16) est interrompu à plusieurs reprises.

6. Rétroviseur extérieur selon la revendication 5, **caractérisé en ce que** les parties (28) du rétrécissement (16) interrompu sont réparties régulièrement le long du bord de coque de miroir (12).

7. Rétroviseur extérieur selon la revendication 5 ou 6, **caractérisé en ce que** les parties (28) du rétrécissement (16) interrompu sont réparties de manière axialement symétrique sur le bord de coque de miroir (12).
